# EUROPEAN PATENT APPLICATION

(11) **EP 0 722 084 A1**
(43) Date of publication of application: **17.07.1996**
(21) Application number: 95203509.5
(22) Date of filing: 21.12.1995
(51) Int. Cl.: G01N 9/06

(54) **Device for measuring the mass concentration of a mud mixture or similar mixture flowing through a pipe line**

(30) Priority: 12.01.1995 NL 9500061
(71) Applicant: IHC Systems B.V., NL-3361 HJ Sliedrecht (NL)
(72) Inventor: Kramers, Casparus H.M., NL-3603 AR Maarssen (NL)
(74) Representative: Lips, Hendrik Jan George, Ir.

(57) **Abstract**

Device for measuring the mass concentration of a mud mixture flowing through a pipe line (3), said device comprising a measuring pipe (1) that can be incorporated in the mud transport line (3) concerned. The measuring pipe (1) is suspended from at least two resilient suspension members (8) being situated near its ends, said suspension members being connected to a portal (6) extending across the measuring pipe (1) and being supported by those parts (4) of the pipe line to which the measuring pipe is connected by elastic tubular connecting elements (2). Between the suspension members (8), the measuring pipe (1) is connected to the portal (6) by a force measurer (12) for measuring the difference in weight occurring when the measuring pipe (1) is only filled with water, or with water containing solid matter. When the water-filled measuring pipe (1) has been aligned, its axis (10) will be in alignment with the axis (11) of the pipe line.

## Description

The invention relates to a device for measuring the mass concentration of a mud mixture or similar mixture flowing through a pipe line, said device comprising a measuring pipe having its ends coupled to a supply line and a discharge line by means of elastic tubular connecting elements, said supply line and discharge lines being fixedly connected to each other by means of a connecting structure, with means for determining the weight of the measuring pipe being present between the connecting structure and the measuring pipe, situated in a point between the connecting elements of the measuring pipe.

Such a device is known from US-A-3143887.

During dredging operations in particular, the process concerned is largely hidden from view. Due to that, determination of the process parameters during dredging is of great importance for an efficient use of the dredging apparatus. Such a parameter is represented by the mass concentration of the displaced mixture, that is, the quantity of solid material present in a certain quantity of water. On account of the presence of the solid material in the water, the density of the dredged material will be between 1000 and 1600 kg/m³.

With the known device described above, the measuring pipe is likewise provided with an elastic tubular connecting element approximately in the middle between the ends. Owing to this, the measuring pipe will bend more or less with variations in the mass concentration. The bending is transferred onto a swivelling rod extending almost parallel to the pipe and being under the influence of springs and the like. Through this rod, bending of the measuring pipe can be more or less compensated by means of a pressurized air-operated balancing system and the weight of the measuring pipe and therefore the mass concentration can be determined.

Such a system is complicated and for the purpose mentioned above, the accuracy is poor due to its sensitivity to vibrations and variations in the delivery pressure, as a result of which pressure fluctuations can only be handled poorly.

The object of the invention is to remove these difficulties and to that end provides for a device characterized in that the measuring pipe is suspended from at least two resilient suspension members being situated near the ends of the measuring pipe, said suspension members being connected to a portal forming the connecting structure between the supply line and discharge line and extending across the measuring pipe, in which the measuring pipe is connected to the portal between the suspension members by means of a force measurer serving to measure the difference in weight occurring when the measuring pipe is only filled with water, or with water containing solid matter.

Such a device can be dimensioned such, and its costs will be such, that it is also suitable for mounting aboard smaller dredger vessel.

The accuracy of the measurement can be further enhanced if the suspension members are designed and/or can be adjusted in such a way, that the axis of the measuring pipe, while this and the parts connecting to it are filled with water, is substantially aligned with the axis of the parts of the pipe line that carry the legs of the portal. Then, the connecting elements will experience only a slight deformation when water containing solid matter flows through the device afterwards.

When the measuring pipe 1 and the parts connecting to it are completely filled with water and the resilient suspension members are adjusted in such a way that the elastic tubular connecting elements are almost completely in alignment with the parts connected to them and will be almost without tension, the weight of the pipe filled with water will be accommodated completely by the resilient suspension members. In that situation, the force measuring rod will hardly sense and measure any force. Before adjusting the zero-point under operational conditions, the force measuring rod can initially be brought under a slight prestress.

When subsequently the measuring pipe is filled with mixture consisting of water containing a solid, said mixture thus having a higher density than water, due to the additional weight the force measuring rod will experience only a slight deformation and the weight of the solid added to the water will be accommodated almost completely by the force measuring rod so that this weight can be measured.

Owing to the fact that the mass concentration is directly derived from the weight increase of the mud mixture in relation to water, the accuracy of the measurement is relatively high. The fact is, that the weight measurement is related to the range of the weight increase only.

The single point suspension of the measuring pipe in the middle between the two resilient suspension members and both elastic tubular connecting elements renders the device relatively insensitive to running pressure fluctuations and vibrations in the dregde line. By this way of mounting the force measuring rod, the measuring pipe will at all times be in static balance and the weight increase will be accommodated and measured completely and exclusively by the force measuring rod.

On account of the fact that in relation to the other components, the force measuring rod is not subject to deformation and the spring constant of the connecting elements is small, the measurement will be almost insensitive to small deviations from the straight alignment of the measuring pipe in relation to the pipes connecting to it.

Further, the axis of the measuring pipe will preferably extend in horizontal direction. A small deviation of the horizontal will however be of limited influence on the accuracy of the measurement. Possibly, the influence of the angle of inclination can be processed in the result of the measurement.

The elastic tubular connecting elements, connecting the measuring pipe to the pipe line, will preferably be manufactured from plastic or natural rubber having a sufficient resistance to wear against the scraping and impacting load of the solid components of the mud mixture. At the same time, they must be able to accommodate the delivery pressure in the pipe line.

They will be dimensioned such, that their spring constant will be small in relation to that of the rod-like force measurer. Thus, as a result of some slight deformation they will only exert small moments and transverse forces on the measuring pipe. Owing to an additional material property of the elastic connecting elements, in case of greater deformation they will absorb some energy, as a result of which a possible swinging movement of the measuring pipe around the suspension point of the force measuring rod will be damped.

Since the mass concentration can change rather quickly, this will also be the case with the signal supplied by the force measurer. As a result of the mechanical vibrations and movements of the ship, vertical accelerating powers will occur, which can periodically affect the weight measurement. In order to enable a stable readout, means for providing a filtering of the measurement can be provided, in which the time constant can be adapted to the frequency of interference signals, such as with the pump blade frequency and with the movements of the ship.

The invention also relates to a method of determining the mass concentration of a mixture flowing through a pipe, in which the device described above is used, in which the device is filled with water first, the resilient suspension members are set in such a way, that the measuring pipe is almost in alignment with the supply line and the discharge line and that the force measured in this state by the force measuring rod is set to zero.

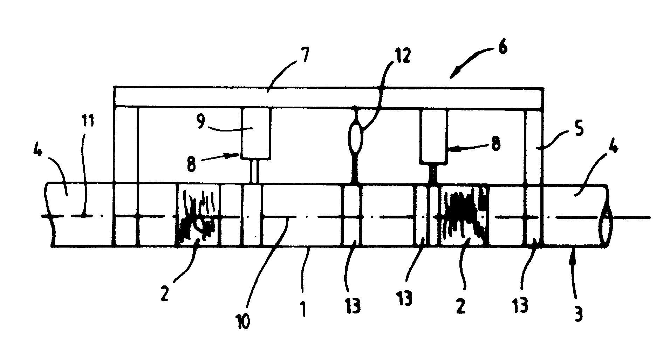

The invention is further explained by way of an embodiment, a side view thereof being shown diagrammatically in the drawing.

The device shown in the drawing comprises the measuring pipe 1 being connected to the pipe line 3 by means of the elastic connecting elements 2.

The legs 5 of a portal 6 have been mounted on the parts 4 of a pipe line 3, the horizontal beam 7 of said portal extending across the measuring pipe and the connecting elements 2.

The measuring pipe 1 is suspended from beam 7 of said portal 6 by means of two suspension members 8 having springs 9 therein. The springs 9 are dimensioned and adjusted in height in such a way, that when the measuring pipe 1 and the connecting elements 2 are filled with water, the axis 10 of the measuring pipe is almost in alignment with the axis 11 of the parts 4 of the pipe line 3 connecting to the elements 2.

In the middle between the two suspension members 8, the measuring pipe 1 is connected to the portal 6 by means of a force measurer 12 designed as a rod. When, as described above, the measuring pipe 1 and the connecting elements 2 connected to it are filled with water, the signal supplied by the force measurer 12 is set at zero. This zero setting can take place during pumping water with the normally available pressure. Due to this, in carrying out measurements, the influence of the pumping pressure on the elastic tubular elements will be kept as small as possible. At the same time, with this zero setting the influence of temperature changes and the like can be corrected.

For example, during operation the zero setting can be checked, and be corrected if necessary.

Now when the water flowing through the measuring pipe 1 contains solid particles, the signal supplied by the force measurer 12 will increase linearly with the density of the mud mixture, so with its mass concentration.

The rigidity of the portal 6 will be such, that under the occurring varying loads it will experience only a slight deformation, by which the mass concentration measurement will therefore hardly be affected.

The legs 5 of the portal 6, the suspension members 8 and the force measurer 12 will preferably be detachably connected to the pipe line 3 or to the measuring pipe 1 by means of pipe clamps 13. This is important in particular with replacement of the wearing parts of the device, such as the measuring pipe 1, the connecting elements 2 and the connecting parts 4 of the pipe line 3.

The parts 4 of the pipe line 3, to which the legs 5 of the portal 6 are connected, will be supported in such a way, that they can experience no displacement or rotation, or just a very small one. Slight vertical displacement will only result in the fact that the measuring pipe 1 is displaced to the same degree, as a result of which the measurement will not be adversely affected. Thus, in a certain sense, the measurement is independent of the stability of the base on which the pipe line has been mounted.

The force measurer can be represented by a rod in a known way provided with one or more strain gauges for electrical determination of the tensile force exerted on the rod. However, one can also use other measuring methods, such as with a hydraulic measurer in which the pressure of the hydraulic medium is measured. There, generally the influence of temperature changes will be greater.

It will be obvious, that only one possible embodiment of the invention according to the invention has been illustrated in the drawing and described above, and that many changes can be made without being beyond the inventive idea.

## Claims

1. Device for measuring the mass concentration of a mud mixture or similar mixture flowing through a pipe line (3), said device comprising a measuring pipe (1) having its ends coupled to a supply line and a discharge line (4) by means of elastic tubular connecting elements (2), said supply and discharge lines (4) being fixedly connected to each other by means of a connecting structure (6), with means (12) for determining the weight of the measuring pipe (1) being present between the connecting structure (6) and the measuring pipe (1), situated in a point between the connecting elements (2) of the measuring pipe (1), characterized in that the measuring pipe (1) is suspended from at least two resilient suspension members (8) being situated near the ends of the measuring pipe (1) and being connected to a portal (6) forming the connecting structure (2) between the supply line and discharge line (4) and extending across the measuring pipe (1) and in which the measuring pipe (1) is connected to the portal (6) between the suspension members (8) by means of a force measurer (12) for measuring the difference in weight occurring when the measuring pipe (1) is only filled with water, or with water containing solid matter.

2. Device according to claim 1, characterized in that the suspension members (8) are designed and/or can be adjusted in such a way, that the axis (10) of the measuring pipe (1), while this and the parts connecting to it are filled with water, is substantially aligned with the axis (11) of the parts of the pipe line (3) that carry the legs (5) of the portal (6).

3. Device according to claim 1 or 2, characterized in that during operation, the axis (10) of the measuring pipe (1) extends in substantially horizontal direction.

4. Device according to one of the preceding claims, characterized in that the elastic tubular connecting elements (2) connecting the measuring pipe (1) to the pipe line (3), are manufactured from plastic or natural rubber having a sufficient resistance to wear against the scraping and impacting load of the solid components of the mud mixture.

5. Device according to claim 4, characterized in that the elastic tubular connecting elements (2) are dimensioned such, that their spring constant will be small in relation to that of the rod designed as force measurer (12). 6 .

6. Device according to one of the preceding claims, characterized in that means for providing a signal filter to be used in reading out the measurement of the signal supplied by the force measurer (12) have been provided.

7. Device according to one of the preceding claims, characterized in that means for setting the zero of the measurement during operation are present.

8. Method of determining the mass concentration of mixture flowing through a pipe (1, 3) using the device according to one of the preceding claims, characterized in that the device is filled with water first, then the resilient suspension members (8) are set in such a way, that the measuring pipe (1) is substantially in alignment with the supply and discharge line (4) and that the force measured in this state by the force measuring rod (12) is set to zero.
